# EUROPEAN PATENT APPLICATION

(11) **EP 1 586 874 A2**
(43) Date of publication of application: **19.10.2005**
(21) Application number: 05102571.6
(22) Date of filing: 01.04.2005
(51) Int. Cl.: G01G 19/10, G01G 5/04

(54) **A weighing module, a vehicle provided therewith, and a method in connection with the weighing module**

(30) Priority: 16.04.2004 SE 0400988
(71) Applicant: Vagab Aktiebolag, 652 21 Karlstad (SE)
(72) Inventor: Kandeman, Acke, 652 72, Karlstad (SE); Israelsen, Rune, 660 60, Molkom (SE); Johansson, Erik, 656 33, Karlstad (SE)
(74) Representative: Johansson, Lars E.

(57) **Abstract**

The invention relates to a weighing module (1) comprising a load cell (10) having the ability in response to an applied load to give a signal indicating the force exerted by the load applied on the load cell (10), a base plate (11) for carrying the load cell (10), means (12) for transmitting a compressive force comprising a manoeuvrable and preferably hydraulic cylinder unit (21, 22) for carrying the load during weighing and for transmitting the compressive force to the load cell (10), alignment means (14, 15; 50) for essentially aligning (L) said means (12) for transmitting a compressive force with an axis of load of the load cell (10), and a support section (31, 32, 33; 60) arranged via said alignment means (14, 15; 50) to take up side forces from the means (12) for transmitting a compressive force, said alignment means (14, 15; 50) comprising bearings (38; 51) arranged to allow for said means (12) for transmitting a compressive force to be moveable at least a limited distance along the line of alignment to and from the base plate (11).

## Description

### TECHNICAL FIELD

The present invention relates to a weighing module of the type specified in the preamble of claim 1. Furthermore, the invention relates to a vehicle provided with such a weighing module and being of the type specified in the preamble of claim 11, as well as a method of weighing with the weighing module and being of the type specified in the preamble of claim 13.

### BACKGROUND OF THE INVENTION

Weighing modules mounted and used on vehicles are previously known, as well as methods of weighing a cargo carried by the vehicle e.g., by such modules.

US-A-5,417,536 discloses a pallet lifter for lifting and moving palletised material and similar cargos. The pallet lifter comprises a wheeled, double-armed lifting fork, and a frame carried by the lifting fork for carrying the pallet and its cargo. Between the frame and each arm of the lifting fork, there are two load cells, one positioned closer to the free end of the arm and one closer to the base of the arm. The four load cells are connected to a weighing instrument that outputs the total weight when the pallet and its cargo is lifted. In order to give an accurate weighing result, the frame is self-aligning in relation to the load cells on the lifting fork, by a ball and socket coupling device being arranged between the frame and each load cell, which ball and socket coupling device has a centre ball surrounded by two opposing cups facing the ball and having a larger radial curvature than the radius of the ball. In this design, the load cells are subjected to load during the entire transportation of the cargo, and accordingly they can be exposed to stresses diminishing the accuracy of the load cells or even putting them out of order.

EP-A-0 713 638 discloses a weighing implement intended to be connected to a vehicle, such as a tractor having a three-point lifting hitch. The weighing implement, described in connection with a device for spreading agricultural materials onto a field, comprises a first frame and a second frame, and a single load cell positioned them between. The first frame has fastening means for its connection to the lifting hitch of the vehicle, and the second frame is movable relative to the first frame, at least in the direction of weighing, by a low-frictional suspension that is restored by spring steel strips. Alternatively, the restoration can be achieved by means of tensile rods in a mechanical joint between two elements that each is attached to a frame and that have parallel recesses of V-shaped cross-section, facing each other. In these recesses, an intermediate plate having opposing, parallel side edges of a somewhat more acute V-shaped cross-section than the recesses, is inserted and kept in clamped position by aid of the tensile rods, such that a knife-edge bearing is formed. It is stated that the described device is able to cope with holes in the fields and forces created when driving in curves. In this design too, the load cell is subjected to load during the entire transportation of the spreader and its cargo, and accordingly it can be exposed to stresses that diminish the accuracy of the load cells or even put it out of order.

US-A-3,648,791 describes a weighing implement that eliminates the above identified problems, but being intended to be positioned on the ground, and not to be carried by a vehicle. The weighing implement comprises a platform carried by four self-levelled air springs, and having four pressurized air reservoirs connected in parallel with the springs. To weigh a vehicle's axle and its load, the wheels on the axle are placed on the platform. Thereafter, pressurized air is supplied to the self-levelled springs and the reservoirs, such that each air spring and its associated reservoir has a pressure corresponding to the pressure of the air spring. Thereafter, the supply of air is shut off, as is the communication between each spring and its associated reservoir, and instead the reservoirs are connected to an equalization line that leads to an instrument that is calibrated in units of weight and that gives an average measure. It is realised that a separate weighing system according to this embodiment, and that moreover makes use of pneumatics that is not always easy to access at adequate capacity, has considerable drawbacks.

A commonly known weighing system, that is usually utilised in connection with vehicles, and that to a certain degree eliminates the above mentioned drawbacks, is constituted by a number of weighing modules arranged at the chassis, wherein the weighing module comprises a load cell having the ability in response to an applied load to give a signal indicating the force exerted by the load applied on the load cell, a base plate for carrying the load cell, means for transmitting a compressive force comprising a hydraulic, manoeuvrable cylinder unit for carrying the load during weighing and for transmitting the compressive force to the load cell, alignment means for essentially aligning said means for transmitting a compressive force with an axis of load of the load cell, and a support section arranged via said alignment means to take up side forces from the means for transmitting a compressive force. Thanks to the hydraulically manoeuvrable cylinder unit, such a weighing module can be arranged to be unaffected in connection with transports, and to provide a simple activation of the weighing module, by lifting up the cargo by aid of hydraulic cylinders, and thereby recording the weight, where after it can be deactivated once again. Accordingly, advantages of such a system is that it is easily integrated with the vehicle, and that it is not exposed to load stresses during transportation. A drawback of known weighing modules of this type is that due to the large loads, the alignment means used to position the force-transmitting means in alignment with the axis of load of the load cell must be very rigidly made, which leads to difficulties in achieving exact weighing results, especially when the construction is used to weigh loads of varying weights, i.e. a very limited field of use is achieved in which an accurate weighing result can be expected. It has been shown that minor deviations from the positioning of the vehicle in a horizontal plane may result in major discrepancies, and furthermore, such a construction has a fairly limited load range within which reasonably accurate weighing can be achieved.

### DISCLOSURE OF THE INVENTION

The object of the present invention is to provide a weighing module with a load cell, in which module the effect on the weighing result of friction and clamping force is diminished, especially in a case in which the direction of the force of the load's weight deviates somewhat from the direction of the axis of load of the load cell, and to provide a vehicle having such a weighing module, in which an accurate weight measurement can be achieved even if the vehicle is positioned in a slope, as well as providing a method for weighing by the weighing module.

In respect of the weighing module, this object is attained by providing the weighing module as defined in the introduction with the features of the characterising portion of claim 1. Thanks to the invention, it is namely possible to combine the advantages according to prior art and yet to achieve a broad weighing accuracy range with larger tolerances in respect of the positioning in connection with the weighing. This is due to the construction according to the invention essentially eliminating the risk of drastic effects on weighing results by friction forces and/or clamping forces, since the force-transmitting means is arranged to be movable in an essentially friction eliminating manner in relation to the load cell. In addition to this, there is the advantage that a wider weighing range can be used at high accuracy. The reason for the latter advantage is that a load cell of conventional type and used in weighing modules makes use of strain gauges. Strain gauges require a certain movement in order to be able to indicate the weight of a load. At loads of up to several tons, that are quite often in question in connection with vehicles, it is not unusual that movements have to be allowed of up to, and sometimes exceeding, half a millimetre. Hence, it is realised that such rigid structures as have been used previously, have involved weighing accuracies in a very narrow range. A major advantage of the invention is accordingly that a much wider range is achieved with a high accuracy in the results of the weighing.

According to one embodiment, the weighing module comprises a load cell having the ability in response to an applied load to give a signal indicating the force exerted by the applied load on the load cell, a base plate for carrying the load cell, means for transmitting a compressive force for carrying the load during weighing and for transmitting the compressive force to the load cell, alignment means for essentially aligning said means for transmitting a compressive force with an axis of load of the load cell, which alignment means at least indirectly, and movably, connect the means for transmitting a compressive force with the base plate. In order to lessen the effect of friction on the weighing result in a case in which the direction of the force of the load's weight somewhat deviates from the direction of the load cell's axis of load, said alignment means comprise a first and a second link system, oriented perpendicularly to each other, so that if the means for transmitting a compressive force, while transmitting compressive force to the load cell, move in the direction of the y-axis in a triaxial, perpendicular system of coordinates, the first link system holds the means for transmitting a compressive force essentially in a plane defined by the y-axis and the z-axis, while the second link system holds the means for transmitting a compressive force essentially in a plane defined by the y-axis and the x-axis. Ideally, i.e. free of play, such a link system would be an impossible design, but with normal manufacturing tolerances, a small play is obtained in the joints which makes the system operate excellent.

The means for transmitting a compressive force comprises a hydraulically manoeuvrable cylinder. Thereby, the load can be lifted from a carrying support during weighing, and the weight of the load can be transmitted down through the load cell for measuring, where after the load is lowered to rest again on the carrying support without the weight of the load going through the load cell, such as for a subsequent transportation of the load.

Preferably, the link system comprises at least one parallel link system, preferably two, the first parallel link system comprising an upper pair of slewing brackets in a first plane that is essentially parallel with the base plate, and a lower pair of slewing brackets in a second plane that is also parallel with the base plate, said slewing brackets of each pair of said first parallel link system being arranged on a respective side of the means for transmitting a compressive force, and the second parallel link system comprising an upper slewing bracket level with the upper pair, as well as a lower slewing bracket level with the lower pair.

It is suitable in this case that two opposing, parallel side walls are fixedly mounted at the base plate and extending up from the same, that the first parallel link system, besides the two pairs of slewing brackets, comprises a slewing bracket attachment, extending between both side walls and being fixedly mounted thereto, a slewing bracket yoke positioned between the side walls and fixedly mounted at the means for transmitting a compressive force, the slewing brackets in the first parallel link system extending in parallel with the side walls and being arranged with its ends pivoted in the slewing bracket attachment and the slewing bracket yoke, such that the slewing bracket yoke is pivotal a short distance in direction to and from the base plate, and that the two slewing brackets of the second parallel link system are arranged with one end thereof pivoted in one of the side walls and the other end thereof pivoted in the slewing bracket yoke, preferably halfway between the two upper and the two lower slewing brackets in the first parallel link system.

Principally, both the slewing bracket attachment and the slewing bracket yoke have the shape of a shallow channel beam with coarse flanges, in which flanges longitudinal grooves have been arranged to receive the ends of the slewing brackets, one fulcrum pin for each slewing bracket end extending from the outside of the flange through the material of the flange, to and through the groove and the slewing bracket end arranged therein, and further into the material of the flange on the other side of the groove. The means for transmitting a compressive force comprises a side support screwed to the slewing bracket yoke.

Suitably, the slewing brackets are pivoted by roller bearings, preferably needle roller bearings, in order to additionally lower the friction and to be able to obtain high resolution in the weighing.

According to an alternative embodiment:
- said alignment means are arranged at transmission of compressive force to the load cell to affect the means for transmitting a compressive force to move along said line by a bearing unit that acts on an outer surface at the cylinder in said cylinder unit.

Thanks to this design, a weighing module is achieved which can be made very compact since the bearing unit thereby acts directly (or via intermediate layer(s)) on the cylinder portion of the means for transmitting a force.

Furthermore, the mentioned objective is achieved by using weighing modules according to any one of claims 1-10, in a wheeled or caterpillar vehicle for transportation of a load and comprising a chassis intended to carry the weight of a load, and at least three, preferably four, weighing modules mounted in connection with load-bearing positions of the chassis, which modules have been connected with a weighing instrument such that they can measure the load. By the design according to the invention, a diminishing is achieved of the additional friction that arises when the vehicle is positioned in a slope, and a more accurate weighing is achieved.

The vehicle, that may be a lorry, an industrial truck or a tractor e.g., advantageously comprises a load shifter in order to lift onto and off a load shifter platform on which the load to be weighed is positioned. In this connection, a load shifter platform can mean many different types of superstructures of varying functions and known to the skilled person, such as different containers, gravel loading platforms, as well as other superstructures. Tow cars and similar provided with load shifters, are well known within the field, and usually have a hydraulic structure provided with a hitch for loading onto and off the shifter platform.

In order to weigh a load on a load shifter platform of a wheeled or caterpillar vehicle, having at least three, preferably four, weighing modules according to any one of claims 1-10 mounted in connection with load-bearing positions of a carrying structure of the vehicle, which modules are connected with a weighing instrument such that they can measure the load, and the means for transmitting a compressive force comprising a hydraulically manoeuvrable cylinder, the approach according to the invention is suitably that any possible engaged platform locks are released, a hydraulic pressure is supplied to the cylinders of each weighing module such that the platform is lifted enough for the entire weight of the platform to rest on the cylinders and thereby on the load cells, where after the weight is read/recorded, and where after the platform is lowered and if appropriate locked by the platform locks. By the weighing being performed as the vehicle combination is standing still and the hydraulic pressure to the cylinder being lowered after the weighing such that the platform with the load is lowered and the load cell is relieved of load, the load cell will be relieved of load during the subsequent transport of the load, and will then not be exposed to stresses that diminish the accuracy of the load cell or even put it out of order.

### BRIEF DESCRIPTION OF THE DRAWINGS

In the following, the invention will be described in greater detail with reference to the attached drawings.
- Fig. 1: is a front view of a weighing module according to a preferred embodiment of the invention.
- Fig. 1a: is a part magnification of a portion of Fig. 1, with the cylinder bottom shown partially in cross-section.
- Fig. 2: is a top view of the weighing module according to Fig. 1.
- Fig. 3: is a side view of the weighing module according to Fig. 1.
- Fig. 4: is a vertical cross-sectional view of the weighing module, taken along line IV-IV in Fig. 2.
- Fig. 5: is a horizontal cross-sectional view of a preferred embodiment of alignment means with two parallel link systems comprised in the weighing module according to Fig. 1, the section cut being positioned level with the upper slewing brackets.
- Fig. 6: is a side view of the alignment means according to Fig. 5.
- Fig. 7: is a vertical cross-sectional view of the alignment means, taken along line VII-VII in Fig. 5.
- Fig. 8: is a side view of a vehicle provided with weighing modules and a load shifter, during loading on/off a load shifter platform.
- Fig. 9: is a side view of the vehicle according to Fig. 8, having a load on the load shifter platform.
- Fig. 9a: is a partial magnification of Fig. 9, showing that the weighing module is not exposed to load at transport of the load shifter platform.
- Fig. 9b: is a partial magnification from Fig. 9, showing how the weighing module lifts the load shifter platform during weighing.
- Fig. 10: is a diagrammatic view of the vehicle having four weighing modules connected to a weighing instrument placed in the driver's cab.
- Fig. 11: is a vertical cross-section of a weighing module according to an alternative embodiment of the invention.
- Fig. 12: is a horizontal cross-sectional view of the weighing module in Fig. 11, and
- Fig. 13: shows a detail of a weighing module according to Figs. 11 and 12.

### DESCRIPTION OF PREFERRED EMBODIMENTS

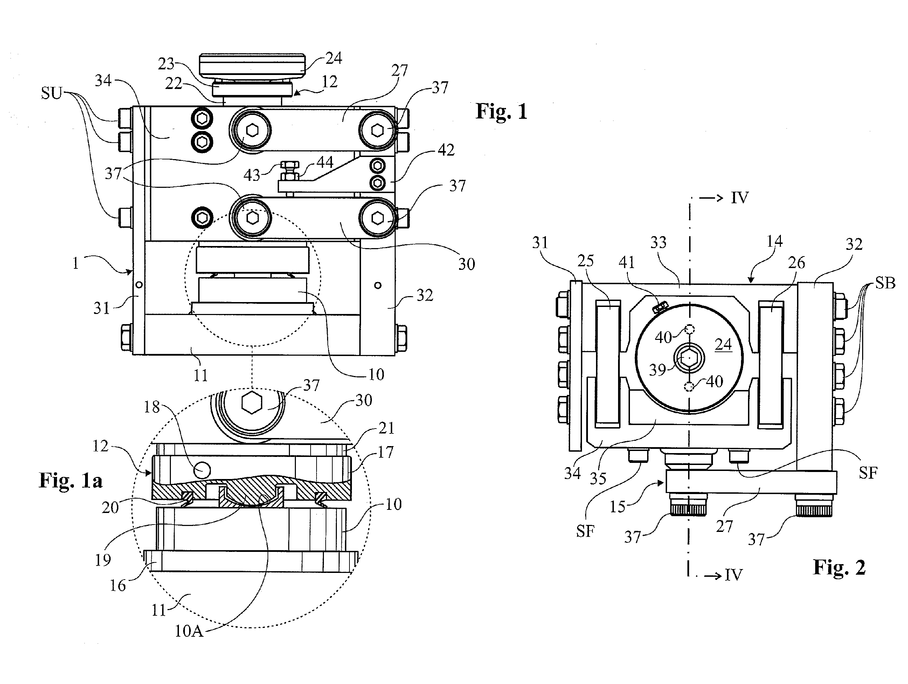

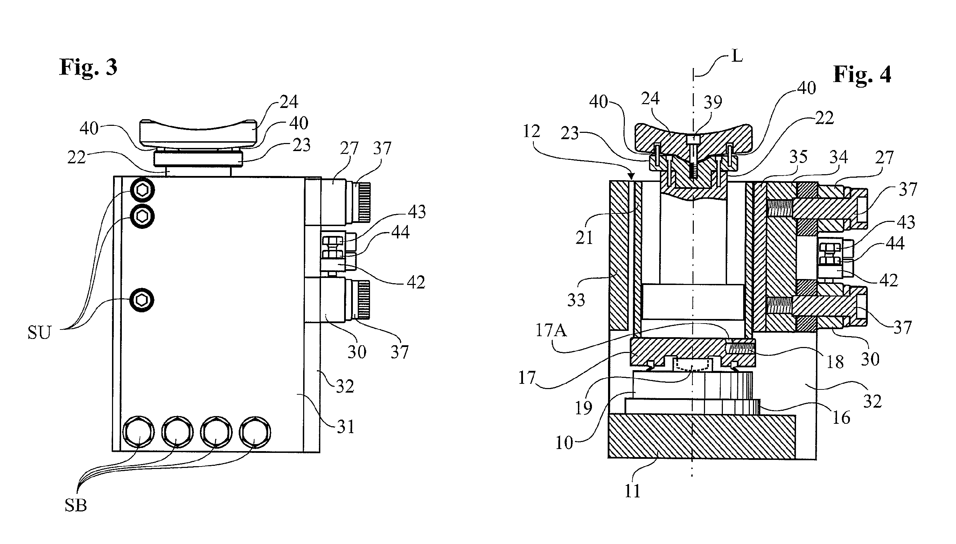

The weighing module 1 shown in Figs. 1-7 comprises a load cell 10 that has the ability in response to an applied load to give a signal that indicates the force exerted by the applied load onto the load cell 10. Furthermore, the weighing module 1 comprises a base plate 11 for carrying the load cell 10, a device 12 for transmitting a compressive force, for carrying the load during weighing and transmitting the compressive force to the load cell 10, and a device 14, 15 for essentially aligning said device 12 for transmitting the compressive force with an axis of load of the load cell 10. The alignment device 14, 15 at least indirectly connects said device 12 for transmitting the compressive force, with the base plate 11.

According to a first embodiment of the invention, said alignment device 14, 15 comprises a first 14 and a second 15 link system, oriented perpendicularly to each other. These are arranged such that if the device 12 for transmitting the compressive force, during transmission of the compressive force to the load cell 10 moves in the direction of the y-axis in a triaxial, perpendicular system of coordinates, the first parallel link system 14 holds the device 12 for transmitting the compressive force essentially in a plane defined by the y-axis and the z-axis, while the second parallel link system 15 holds the device 12 for transmitting the compressive force essentially in a plane defined by the y-axis and the x-axis.

The load cell 10 can be comprised of any of a multitude of commercially available load cells, but in the embodiment shown in Fig. 1, a high precision compression load cell is used, denoted Model 220 from Tedea-Huntleigh Europe Ltd., Cardiff, Great Britain. The load cell 10 is positioned in a ring 16 that is fixed, suitably welded, on top of the base plate 11, and the load cell has a not shown connection cable for power supply and for carrying the output signal to a not shown weighing instrument.

Preferably, the device for transmitting the compressive force comprises a hydraulically manoeuvrable cylinder 12 (or more correctly a "piston-cylinder-unit"), which unit may however be replaced by other mechanisms, such as a pneumatic piston/cylinder, a ball screw etc., that allows for a similar function. In order to expedite the description, the term hydraulic cylinder is used below to denote the device for transmitting the compressive force. Of course, when so is required, the hydraulic cylinder is supplied with pressurised oil from a not shown pump that receives the oil from a not shown reservoir.

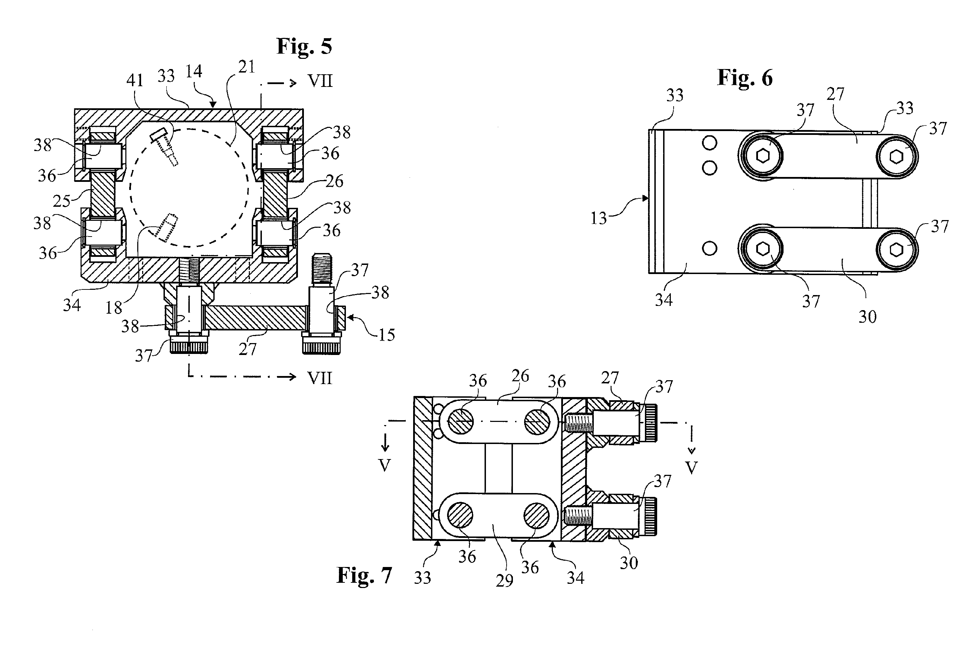

As is clear from Figs. 1 and 4, the cylinder 12 has a bottom 17, provided with a connection 18, 17A for hydraulic oil, and a centre convex pin 19 projecting downwards for interaction with a concave load carrying surface 10A of somewhat larger radius, on the load cell 10, which is a design that is advantageous in the purpose of giving accurate weighing results even if the contact surface between the pin 19 and the load cell 10 is not precisely centred.

Moreover, a lip sealing ring 20 is concentrically inserted at the underside of the cylinder bottom 17, for contact sealing against the load cell 10 and protection of the area inside against contamination and impaired weighing. A cylinder tube 21 extends upwards from the bottom 17, inside which tube a piston with a piston stem 22 (see Fig. 4) is arranged with a piston stem portion 22 that projects upwards from the cylinder tube 21 and terminates with a piston stem end 23. A pressure shoe 24 is articulately mounted on the piston stem end, for example by being movably attached by a centre screw 39, which pressure shoe 24 is somewhat tiltable in all directions, by a relative movement between interacting and spherically curved surfaces, in order to adjust to the load to be weighed.

In the preferred embodiment, the upper side of the pressure shoe is cylindrically rounded, in order to receive the load to be weighed, and at least one, preferably two guide pins 40 (best shown in Fig. 4) extend upwards from the piston stem end 23 and enter into corresponding recess(es) in the pressure shoe 24, in order to lock the pressure shoe 24 against rotation relative to the piston stem end 23. The piston stem 22 is secured against rotation relative to the cylinder tube 21, by aid of a screw 41 (see Fig. 2) that extends through the wall of the cylinder tube 21 and into a not shown longitudinal guide track in the piston stem 22. If desired, the piston stem 22 may be of tubular shape and it may enclose a not shown tensile spring that after the piston stem 22 has been ejected helps to return the same to the bottom position.

Two opposing and parallel side walls 31, 32 are fixedly attached to the bottom plate 11, and extend upwards from the same. In Figs. 1-3, this attachment is shown to be realised by four strong screws SB for each side wall. These parts are connected to form a combined unit that may be seen as a stand, by a slewing bracket attachment 33, provided with a screw SU at the top and extending between the walls 31, 32.

As is best seen in Figs. 5-7, the first parallel link system 14 comprises an upper pair of slewing brackets 25, 26 in a first plane that is essentially parallel with the base plate 11, and a lower pair of slewing brackets 28, 29 in a second plane that is parallel with the base plate 11, the slewing brackets in each pair of said first parallel link system 14 being positioned on a respective side of the hydraulic cylinder 12. The second parallel link system 15 comprises an upper slewing bracket 27 level with the upper pair 25, 26, and a lower slewing bracket 30 level with the lower pair 28, 29.

In addition to the two pairs of slewing brackets 25, 26 and 28, 29, the first parallel link system 14 comprises a slewing bracket attachment 33 that extends between and is fixedly attached to both side walls 31, 32, as well as a slewing bracket yoke 34 positioned between side walls 31, 32 and fixedly attached (preferably by welding) to the hydraulic cylinder 12. For this purpose and as best shown in Fig. 2, the cylinder 12 is provided with a side support 35 that fits the slewing bracket yoke. In the shown embodiment, the slewing bracket attachment 33 is attached to one of the side walls 31 by three screws SU in a vertical column, and to the other side wall 32, also by three screws SU in a vertical column, while the slewing bracket yoke 34 is attached to the side support 35 of the cylinder 12 by two rows of three screws SF in a vertical column.

The slewing brackets 25, 26 and 28, 29 of the first parallel link system 14 extend in parallel with the side walls 31, 32, and are arranged with their ends pivoted in the slewing bracket attachment 33 and the slewing bracket yoke 34, such that the slewing bracket yoke 34 with the cylinder 12 attached thereto is pivotal a short distance, usually less than a millimetre, in a direction to and from the load cell 10 carried by the base plate 11. The two slewing brackets 27, 30 of the second parallel link system 15 are arranged with one of their ends pivoted in one of the side walls 32 and the other end pivoted in the slewing bracket yoke 34, preferably halfway between the two upper 25, 25, and halfway between the two lower slewing brackets 28, 29, respectively, of the first parallel link system 14.

In principle, both the slewing bracket attachment 33 and the slewing bracket yoke 34 have the shape of a shallow channel beam with coarse flanges, in which flanges longitudinal grooves have been arranged to receive the ends of the slewing brackets 25, 26 and 28, 29. For each slewing bracket end, one fulcrum pin 36 extends from the outside of the flange through the material of the flange, to and through the groove and the slewing bracket end arranged therein, and further into the material of the flange on the other side of the groove.

All slewing brackets 25-30 are pivoted by roller bearings 38 (shown in Fig. 5, but not in Figs. 4 or 7), preferably needle roller bearings. It is suitable in this case that the fulcrum pins 36 in one of the systems 14 is constituted by plain shafts against which the needle roller bearings may roll directly, while the corresponding fulcrum pins for the slewing brackets 27, 30 in the second parallel link system 15 are constituted by plain shaft portions of reamed bolts 37, by which the second parallel link system 15 is pivoted at the second side wall 32 and the slewing bracket yoke 34. In order to provide a required attachment for the reamed bolts 37, side wall 32 is considerably much thicker than side wall 31.

Also, a stop arm 42 is screwed to the thicker side wall 32, at a position between the upper slewing bracket 27 and the lower slewing bracket 30 of the second parallel link system 15. The stop arm 42 is arranged between and extends in parallel with these two slewing brackets 27, 30, and at its end it is provided with an adjustable stop screw 43 and an associated locking nut 44 by aid of which the upward movement of the lower slewing bracket 30, and thereby also the upward movement of the slewing bracket yoke 34, is stopped in an adjustable position.

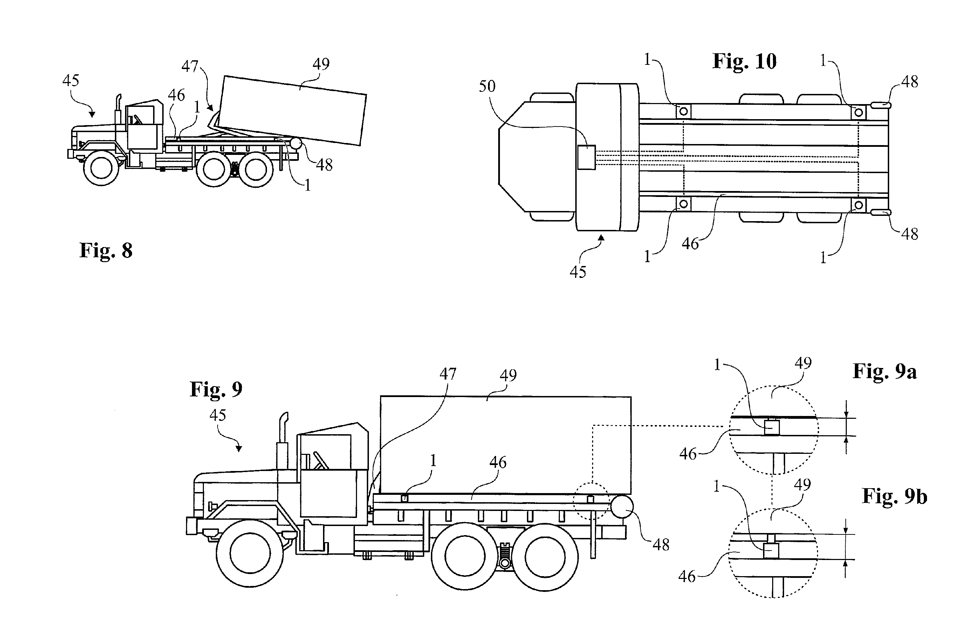

Fig. 8 shows a wheeled vehicle 45, namely a lorry with a chassis 46 on which a load shifter 47 is mounted. The load shifter 47 comprises a special, hydraulically manoeuvred, slewing bracket structure, provided with a hitch for hitching and lifting/lowering a load shifter platform, and is well known to the person skilled in the art. Suitably, also the hydraulic cylinder of the weighing module 1 is connected to the hydraulic system of the vehicle. At the end of the chassis 46, two break rollers 48 are arranged, one on each side of the vehicle 45, and the load shifter platform 49, shown in Fig. 8 during loading on/off by aid of the load shifter 47, is carried by the break rollers 48. The load shifter platform may be of any of a variety of embodiments well known to the skilled person and of varying functions, such as containers, gravel loading platforms, special superstructures etc.

Fig. 9 shows the vehicle 45 with the load shifter platform 49 fully up on the chassis 46 that on each long side is provided with two weighing modules 1 arranged at a distance from each other. The part magnification in Fig. 9a shows that the load shifter platform 49 normally rests directly on the chassis 46, without contacting the weighing module 1, while Fig. 9b shows how the load shifter platform 49 and its load is lifted during weighing by aid of the piston stem 22 of the hydraulic cylinder that is part of the weighing module 1. Thereby, the load cell 10 of the weighing module 1 is subjected to load, and responsive to the applied load, it gives an output signal. By the slewing bracket design according to the invention, a diminishing is achieved of the additional friction that arises when the vehicle is positioned in a slope, and a more accurate weighing is achieved.

In Fig. 10, that is a diagrammatic view of the vehicle 45, it is shown how cables connect four weighing modules 1, placed closed to one corner each of the chassis, with a weighing instrument 50 placed in the driver's cab of the vehicle, such that the driver can read the weight of the load. It is furthermore clear from Fig. 10 that the weighing modules 1 can be placed on the inside of the two carrying side rails of the chassis 46.

When weighing by use of a weighing module 1 in accordance with the description above, for example when weighing a load on a load shifter platform 49 of a wheeled or caterpillar vehicle 45 having a chassis, in which at least three, preferably four weighing modules 1 have been mounted in load carrying positions, and the modules have been connected to a weighing instrument 50 such that they can weigh the load, and the device 12 for transmitting the compressive force comprising a hydraulically manoeuvrable cylinder, according to the invention, the weighing method comprises that when the vehicle 45 stands still, any possible engaged platform locks are released, a hydraulic pressure is supplied to the cylinders 12 of each weighing module 1 such that the platform 49 is lifted enough for the entire weight of the platform to rest on the cylinders 12 and thereby on the load cells 10, where after the weight is read/recorded, and where after the platform 49 is lowered and if appropriate locked by the platform locks, where after the vehicle 45 can be driven. In this way, the weighing modules and the load cells are protected from such stresses that would endanger appropriate operation.

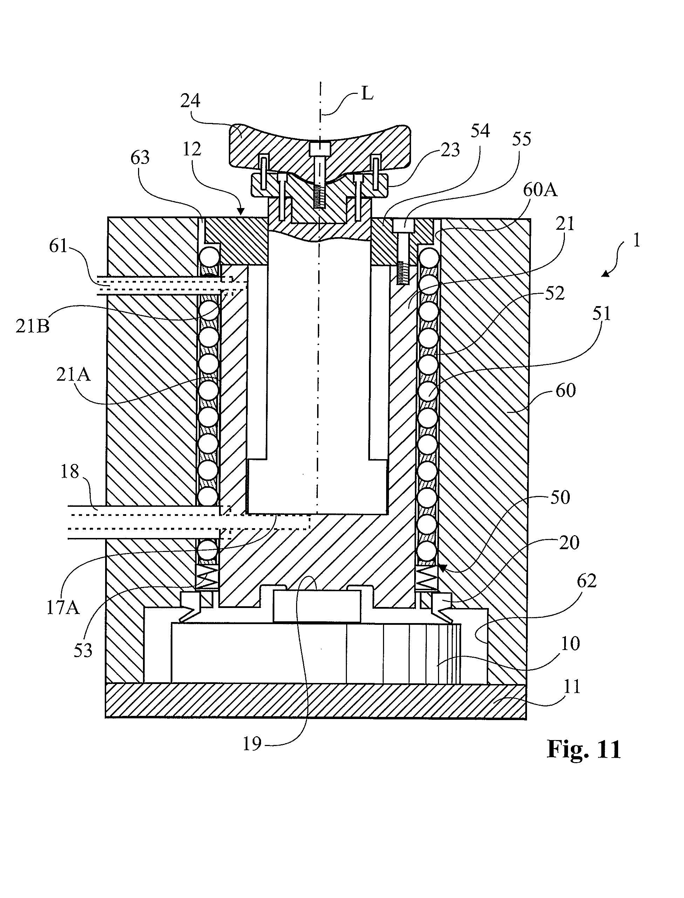

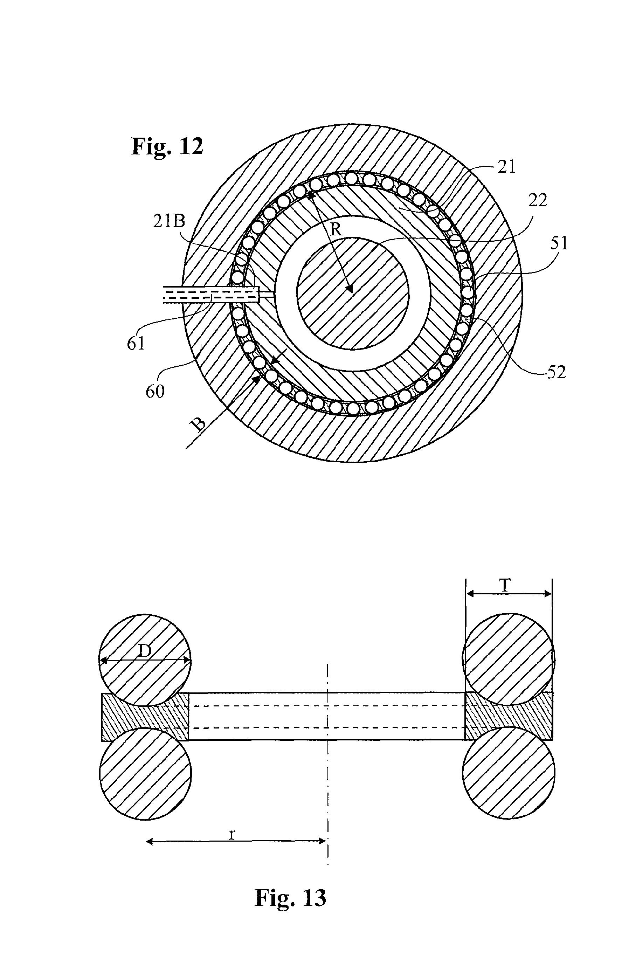

Figs. 11-13 show an alternative embodiment of a weighing module according to the invention. Fig. 11 shows, in vertical cross-section, the principal design of this embodiment, the same type of reference numerals being used for certain details having the same function as the embodiment described above. Accordingly, many of the included details are exactly the same as described in the previously described embodiment, and accordingly they will not be described in greater detail in connection with this embodiment. The major difference is in the principle of how the force-transmitting means 12 has been arranged in a manner that in principle is frictionless and moveable in relation to the support section 11, 60. In this embodiment, the support section consists of a cylindrical casing 60 provided at its bottom portion with a bottom plate 11 upon which the load cell 10 rests. The cylinder housing 21 for the hydraulic piston 22 included in the force-transmitting means 12, is arranged with its outer surface 21A in contact with a ball bearing unit 50. The ball bearing unit 50 comprises a plurality of balls 51, evenly distributed around the envelope surface about the cylinder portion 21, in a gap space 63 between the support section 60 and said surface 21A. The balls 51 are, by ball retainer elements 52, suitably in the form of rings, kept in place at predetermined positions, with the purpose of the balls not abutting each other. Such retainer rings of ball journal bearings are suitably made of plastics (may also be of different materials, such as metal), and has recesses 56 in order to hold/position the balls 51. The retainer ring 52 has the same centre radius r as the centre radius R of the gap 63. The radial thickness T of material of the ring is however considerably smaller than the width B of the gap 63, such that smaller gaps are formed on both sides between wall sections 60A, 21A and the rings 52. The balls 51 however have a diameter D that is precisely adapted to the width B of the gap 63, (D ≈ B > T), whereby the cylinder portion 21 can be moved inside the support section 60, along the centre line L, in principle frictionless and free of play. A spring member 53 is arranged between the lower end of the bearing unit 50 and the support section 60, which spring member rests on a shoulder 66 that projects inwardly in relation to the outer limit surface 60A of the gap. Thanks to this spring member 53, the bearing unit 50 can be moved an adequate distance downwards, without contacting a stop. Accordingly, the only purpose of the spring member 53 is to make sure that the bearing unit 50 is always positioned such that it can move freely both upwards and downwards (the distance needed in order to obtain a precise weighing result), whereby it is realised that the spring force only has to be large enough to carry the weight of the bearing unit 50 itself, which means forces small enough not to affect the weighing result. At the top, the bearing unit 50 is limited/kept in place by a closing 54 screwed to the upper end of the cylinder unit 21. A connection/conduit 18 for hydraulic oil is also shown, communicating 17A with the bottom surface of the piston 22, as well as a corresponding conduit 61 communicating with an upper surface of the piston 22. As is clear from Fig. 12, a groove 21B in the cylinder 21 is aligned with the connection 61, with the purpose of being able to arrange a guide means (not shown) integral with said connection 61 and projecting into the groove 2 1 B in order to prevent rotation/turning of the cylinder 21. Due to the relative movement between the support section 60 and the cylinder portion 21, there are also cavities in the bearing unit 50 in the area at the transition from the respective inlet passage 18, 61 to the cylinder unit 21. In principle, the function of a weighing module according this the embodiment is more or less exactly the same as has been described above. Thanks to the bearing unit 50, the friction is accordingly essentially eliminated and also the possibilities of clamping forces to occur is eliminated, such that a very precise weighing result can be achieved.

While the invention has been shown and described herein with reference to a particularly suitable embodiment, it is evident that many modifications of and additions to it can be made. The vehicle may for example be other than a lorry, such as a tractor or an industrial truck, and it need not even be a wheeled vehicle but might as well be a caterpillar vehicle. Furthermore, the vehicle can be provided with only three weighing modules, but four are preferred as they will give a greater stability. Therefore, the invention according to the enclosed claims should be interpreted as broadly as possible, such that all equivalent designs are comprised. It is among other things realised that instead of the shown system of parallel links, the same function can be achieved by a link system having only one arm and by achieving a parallel control by aid of gear of teeth and a teethed track. It is furthermore realised that many different types of equivalent solutions, such as plain bearings, can be used in order to achieve the function according to the invention. Finally, it is realised that in certain cases an inverted design can be used in the force transmission to the load cell 10, such that its surface instead is concave and the contact surface of the force-transmitting means instead is convex.

## Claims

1. A weighing module (1) comprising a load cell (10) having the ability in response to an applied load to give a signal indicating the force exerted by the load applied on the load cell (10), a base plate (11) for carrying the load cell (10), means (12) for transmitting a compressive force comprising a manoeuvrable and preferably hydraulic cylinder unit (21, 22) for carrying the load during weighing and for transmitting the compressive force to the load cell (10), alignment means (14, 15; 50) for essentially aligning (L) said means (12) for transmitting a compressive force with an axis of load of the load cell (10), and a support section (31, 32, 33; 60) arranged via said alignment means (14, 15; 50) to take up side forces from the means (12) for transmitting a compressive force, **characterised in that** said alignment means (14, 15; 50) comprises bearings (38; 51) arranged to allow for said means (12) for transmitting a compressive force to be moveable at least a limited distance along the line of alignment to and from the base plate (11).

2. A weighing module according to claim 1, **characterised in that** said alignment means comprise a first and a second link system (14 and 15, respectively), oriented perpendicularly to each other, arranged in connection with the transmission of a compressive force to the load cell (10) to affect the means (12) for transmitting a compressive force to move in the direction of the y-axis in a triaxial, perpendicular system of coordinates, the first link system (14) holding the means (12) for transmitting a compressive force essentially in a plane defined by the y-axis and the z-axis, while the second link system (15) holds the means (12) for transmitting a compressive force essentially in a plane defined by the y-axis and the x-axis.

3. A weighing module according to claim 1 or 2, **characterised in that** at least one, preferably both, of said link systems (14, 15) is/are constituted by parallel link system(s).

4. A weighing module according to claim 3, **characterised in that**
a) the first parallel link system (14) comprises an upper pair of slewing brackets (25, 26) in a first plane that is essentially parallel with the base plate (11), and a lower pair of slewing brackets (28, 29) in a second plane that is parallel with the base plate (11), the slewing brackets in each pair of said first parallel link system (14) being positioned on a respective side of the means (12) for transmitting a compressive force, and that
b) the second parallel link system (15) comprises an upper slewing bracket (27) level with the upper pair (25, 26), and a lower slewing bracket (30) level with the lower pair (28, 29).

5. A weighing module according to claim 4, **characterised in that**
a) the support section comprises two opposing and parallel side walls (31, 32) that are fixedly attached to the bottom plate (11), and extend upwards from the same, that
b) in addition to the two pairs of slewing brackets (25, 26 and 28, 29), the first parallel link system (14) comprises a slewing bracket attachment (33) that extends between and is fixedly attached to both side walls (31, 32), a slewing bracket yoke (34) positioned between the side walls (31, 32) and fixedly attached to the means (12) for transmitting a compressive force, the slewing brackets (25, 26) of the first parallel link system (14) extending in parallel with the side walls (31, 32), and being arranged with their ends pivoted in the slewing bracket attachment (33) and the slewing bracket yoke (34), such that the slewing bracket yoke (34) is pivotal a short distance in a direction to and from the base plate (11), and that
c) the two slewing brackets (27, 30) of the second parallel link system (15) are arranged with one of their ends pivoted in one of the side walls (32) and the other end pivoted in the slewing bracket yoke (34), preferably halfway between the two upper (25, 26), and halfway between the two lower slewing brackets (28, 29), respectively, of the first parallel link system (14).

6. A weighing module according to any one of claims 3-5, **characterised in that** the slewing brackets (25-30) are pivoted by roller bearings (38), preferably needle roller bearings.

7. A weighing module according to claim 1, **characterised in** said alignment means (50) arranged at transmission of a compressive force to the load cell (10), to affect the means (12) for transmitting a compressive force to move along said alignment line, by means of a bearing unit (50) acting on an outer surface (2 1 A) at the cylinder (21) of said cylinder unit (21, 22).

8. A weighing module according to claim 7, **characterised in that** said bearing unit (50) at its lower end rests on a resilient member (53).

9. A weighing module according to claim 7 or 8, **characterised in that** said bearing unit (50) comprises balls (51), preferably positioned in ball retainers (52).

10. A weighing module according to any one of the preceding claims, **characterised in that** the contact surfaces (19, 10A) between the load cell (10) and the force-transmitting means (12) are curved surfaces, one of them being convex and the other being concave.

11. A wheeled or caterpillar vehicle (45) for transportation of a load and comprising a chassis (46) intended to carry the weight of a load (49), and at least three, preferably four, weighing modules (1) mounted in connection with load-bearing positions of the chassis (46), which modules are connected with a weighing instrument (50) such that they can measure the load, **characterised in that** the weighing modules (1) are performed according to any one of claims 1-10.

12. A vehicle according to claim 11, **characterised in that** it comprises a load shifter (47) to lift onto and off a load shifter platform on which the load to be weighed is positioned.

13. A method in connection with the weighing by a weighing module (1) according to any one of claims 1-10, preferably for weighing a load (49) on a load shifter platform of a wheeled or caterpillar vehicle (45), having at least three, preferably four, weighing modules (1) mounted in connection with load-bearing positions on a chassis of the vehicle (45), which modules are connected with a weighing instrument (50) such that they can measure the load, and the means (12) for transmitting a compressive force comprising a hydraulically manoeuvrable cylinder (21, 22), **characterised in that** any possible engaged platform locks are released while the vehicle (45) is at a standstill, a hydraulic pressure is supplied to the cylinders (21, 22) of each weighing module (1) such that the load (49) is lifted enough for the entire weight of the platform to rest on the cylinders (12) and thereby on the load cells (10), where after the weight is read/recorded, and where after the load (49) is lowered and if appropriate locked by the platform locks.
